# EUROPÄISCHE PATENTANMELDUNG

(11) **EP 4 154 701 A1**
(43) Veröffentlichungstag der Anmeldung: **29.03.2023**
(21) Anmeldenummer: 22186983.7
(22) Anmeldetag: 26.07.2022
(51) Int. Cl.: A01G 7/00, A01G 27/00

(54) **ANBAUSYSTEM FÜR PFLANZEN**

(30) Priorität: 03.09.2021 DE 102021209690
(71) Anmelder: BSH Hausgeräte GmbH, 81739 München (DE)
(72) Erfinder: Daxenberger, Florian, 83257 Gstadt (DE); Krautenbacher, Otto, 83349 Palling (DE); Ibrahimaj, Egzon, 83278 Traunstein (DE); Röckl, Matthias, 85521 Ottobrunn (DE); Thaler, Sabine, 84036 Kumhausen (DE)

(57) **Zusammenfassung**

Ein Anbausystem (100) für eine Pflanze (115) umfasst eine Kamera (135) zur optischen Abtastung einer angebauten Pflanze (115); einen Aktor (130) zur Steuerung eines Umwelteinflusses auf die Pflanze (115); und eine Verarbeitungseinrichtung (125), die dazu eingerichtet ist, einen Zustand der Pflanze (115) in einer optischen Abtastung zu erkennen und den Aktor (130) in Abhängigkeit des bestimmten Zustands zu steuern.

## Beschreibung

Die vorliegende Erfindung betrifft ein Anbausystem für Pflanzen. Insbesondere betrifft die Erfindung das Steuern des Anbausystems.

Um in einem Haushalt Pflanzen anzubauen, sind Anbausysteme bekannt, die als "Indoor Gardening System" bezeichnet werden. Diese umfassen üblicherweise einen Behälter mit einem Substrat, in dem die Pflanzen wachsen können, sowie eine Lichtquelle, eine Bewässerungssteuerung und eine Steuervorrichtung. Die Steuervorrichtung ist dazu eingerichtet, eine Beleuchtung und eine Bewässerung so zu steuern, dass die Pflanze guten Umweltbedingungen ausgesetzt ist. Ein solches System kann platzsparend in einer Küche oder auf einem Balkon verwendet werden, um Pflanzen anzubauen, die etwa als Küchenkräuter Verwendung finden können.

US 2019 0 113 495 A1 zeigt ein Anbausystem mit einer Kamera zur Bereitstellung eines Bilds einer angebauten Pflanze.

Unterschiedliche Pflanzen erfordern unterschiedliche Umweltbedingungen, um sich optimal zu entfalten, zu wachsen oder Früchte zu tragen. An konventionellen Anbausystemen können Parameter für die Bewässerung oder die Beleuchtung auf eine konkrete Pflanze abgestimmt werden. Die Pflanze kann beispielsweise als Setzling oder Keimling zusammen mit einer Angabe bevorzugter Anbauparameter bereitgestellt sein.

Eine der vorliegenden Erfindung zu Grunde liegende Aufgabe besteht in der Angabe einer verbesserten Technik zur Steuerung eines Anbausystems für eine Pflanze. Die Erfindung löst diese Aufgabe mittels der Gegenstände der unabhängigen Ansprüche. Unteransprüche geben bevorzugte Ausführungsformen wieder.

Nach einem ersten Aspekt der vorliegenden Erfindung umfasst ein Anbausystem für eine Pflanze eine Kamera zur optischen Abtastung einer angebauten Pflanze; einen Aktor zur Steuerung eines Umwelteinflusses auf die Pflanze; und eine Verarbeitungseinrichtung. Dabei ist die Verarbeitungseinrichtung dazu eingerichtet, einen Zustand der Pflanze in einer optischen Abtastung zu erkennen und den Aktor zur Steuerung eines Umwelteinflusses auf die Pflanze in Abhängigkeit des bestimmten Zustands zu steuern.

Erfindungsgemäß kann der Umwelteinfluss auf die Pflanze in Abhängigkeit eines individuellen Zustands der angebauten Pflanze gesteuert werden. Der Zustand kann beispielsweise ein Alter, eine Größe oder eine erfolgte Entwicklung der Pflanze betreffen. So kann der Umwelteinfluss in Abhängigkeit von aktuellen Bedürfnissen oder Möglichkeiten der Pflanze jeweils optimal gesteuert werden.

Der Aktor kann ferner in Abhängigkeit eines vorbestimmten Entwicklungsziels der Pflanze gesteuert werden. Das Entwicklungsziel kann von einem Benutzer des Anbausystems vorgegeben sein. So kann berücksichtigt werden, dass ein maximales Wachstum der Pflanze nicht notwendigerweise der vorherrschende Wunsch des Benutzers ist.

Das Entwicklungsziel kann beispielsweise eines von einem Keimen, einem Wachsen, einem Ausbilden von Früchten, einem Ausbilden von Samen, einem Blühen, einem Verwelken, einem Kompostieren oder einem Konservieren eines Entwicklungszustands umfassen. Es können auch mehrere Entwicklungsziele vorgegeben sein, die in einer vorbestimmten Weise gewichtet werden können. Die Gewichtung kann ebenfalls durch einen Benutzer beeinflusst werden.

In einer besonders bevorzugten Ausführungsform umfasst der Aktor eine Beleuchtung. Die Beleuchtung kann in Helligkeit und/oder spektraler Zusammensetzung des bereitgestellten Lichts gesteuert werden. Beispielsweise kann ein Anteil von kurzwelligem, insbesondere blauem Licht erhöht werden, um ein Blattwachstum der Pflanze zu steigern. Ein Anteil langwelligen Lichts, insbesondere roten Lichts, kann gesteigert werden, um die Blütenbildung der Pflanze zu fördern. Allgemein kann eine hohe Beleuchtungsintensität gesteuert werden, um ein schnelleres Wachstum zu bewirken, oder eine geringere Intensität, um das Wachstum zu hemmen. Außerdem kann die Beleuchtung an eine Jahreszeit oder eine für die Pflanze simulierte Jahreszeit angepasst sein. Eine Pflanze, die regulär im Frühling blüht, braucht zur Bildung ihrer Blüten üblicherweise eine kürzere Beleuchtungsdauer pro Tag als eine Pflanze, die im Sommer blüht. Die Beleuchtung kann so gesteuert werden, dass die Pflanze die für das gewählte Entwicklungsziel optimalen Umweltbedingungen vorfindet.

In einer weiteren Ausführungsform kann die Pflanze erkannt werden. Dabei kann auch eine Unterform oder Variante einer bekannten Pflanze automatisch erkannt werden, um auf ihre besonderen Bedürfnisse hinsichtlich der Umwelteinflüsse eingehen zu können.

Bevorzugte Umwelteinflüsse können in Abhängigkeit der vorliegenden Pflanze bestimmt werden. Die Bestimmung erfolgt bevorzugt aus einer statischen Quelle, beispielsweise hinterlegten Daten in einem lokalen Speicher oder mittels Anfrage an einen Dienst, der über ein Netzwerk zugänglich sein kann. Bezüglich unterschiedlicher Entwicklungsziele können unterschiedliche Umwelteinflüsse bereitgestellt werden. Die hinterlegten Einflüsse können bezüglich der vorliegenden Pflanze angepasst werden.

Das Erkennen erfolgt bevorzugt mittels eines künstlichen neuronalen Netzwerks (KNN). Das KNN kann lokal vorgesehen sein oder die Verarbeitungseinrichtung ist dazu eingerichtet, einen externen Dienst für die Erkennung der Abtastung anzufragen. Das KNN kann eine hohe Erkennungsleistung bei moderaten Ansprüchen an eine Verarbeitungskapazität oder Speicher bereitstellen.

In einer weiteren Ausführungsform wird eine optische Abtastung einer erkannten Pflanze zum Trainieren eines künstlichen neuronalen Netzwerks bereitgestellt. Insbesondere kann eine zeitliche Serie von optischen Abtastungen der Pflanze bereitgestellt werden, um die Entwicklung der Pflanze zu dokumentieren.

Bevorzugt ist einer bereitgestellten optischen Abtastung ein auf die Pflanze einwirkender Umwelteinfluss zugeordnet. Der Umwelteinfluss kann insbesondere auf der Basis einer Steuerung des Aktors bestimmt sein. Zusammen mit der optischen Abtastung kann so ein Datensatz entstehen, der zum überwachten Lernen eines KNN eingesetzt werden kann. Das KNN kann insbesondere lernen, welcher Einfluss ein Umweltparameter oder eine Kombination unterschiedlicher Umweltparameter auf das Wachstum der Pflanze hat. Aufgrund einer Vielzahl solcher Daten oder Datenreihen kann das KNN effizient trainiert werden. Das trainierte KNN kann zur Erkennung der Pflanze oder ihres Zustands eingesetzt werden.

In einer weiter bevorzugten Ausführungsform umfasst das Anbausystem ferner einen Sensor zur Bestimmung eines bestehenden Umwelteinflusses auf die Pflanze. Der bestehende Umwelteinfluss kann insbesondere dem Einfluss des Aktors entsprechen. Der Aktor kann derart gesteuert werden, dass der bestehende Umwelteinfluss an einen bestimmten Umwelteinfluss angepasst wird. Anders ausgedrückt kann der Aktor dazu angesteuert werden, den bestehenden Umwelteinfluss zu verstärken oder abzuschwächen.

Benötigt die Pflanze beispielsweise mehr Sonnenstunden als am Aufstellungsort des Anbausystems vorhanden sind, so kann eine Beleuchtung dazu verwendet werden, den durch die Pflanze erfassten Tag zu verlängern. Der Aktor kann auch eine Beschattungseinrichtung umfassen, mit dem der durch die Pflanze erfasste Tag verkürzt werden kann. Soll der durch die Pflanze wahrgenommene Tag gegenüber dem am Aufstellungsort geltenden Tag verschoben werden, so können beide Maßnahmen verwendet werden. In ähnlicher Weise kann eine mittels des Sensors erfasste Feuchtigkeit durch eine Bewässerungseinrichtung verstärkt oder durch eine Trocknungseinrichtung verringert werden. Eine mittels des Sensors erfasste Temperatur kann mittels einer Heizung angehoben oder mittels einer Kühleinrichtung abgesenkt werden. Eine mittels des Sensors erfasste Luftbewegung kann mittels eines Ventilators verändert oder verstärkt, oder mittels einer Abschirmung verringert werden. Ein mittels des Sensors erfasstes Nährstoffangebot für die Pflanze kann mittels einer Dosiervorrichtung erhöht oder verringert werden.

Der Aktor kann dazu eingerichtet sein, eines von einer Beleuchtung, einer Bewässerung, einer Temperierung, einer Luftbewegung und einer Zufuhr von Nährstoffen für die Pflanze zu steuern. Mehrere Aktoren können zur Steuerung mehrerer Umwelteinflüsse auf die Pflanze vorgesehen sein.

In einer weiteren Ausführungsform ist die Verarbeitungseinrichtung dazu eingerichtet, zu bestimmen, dass die Pflanze einen vorbestimmten Entwicklungszustand erreicht hat und einen Hinweis auf eine Beschaffung einer neuen Pflanze bereitzustellen. Der Entwicklungszustand kann einen Punkt in einer lebenslangen Entwicklung der Pflanze betreffen. So kann eine Pflanze, deren Nutzen für den Benutzer zu Ende geht, durch eine andere Pflanze ersetzt werden. So kann verhindert werden, dass Anbaufläche im Anbausystem brachliegt. Ein Benutzer kann maximalen Anbaunutzen aus dem System ziehen.

Nach einem weiteren Aspekt der vorliegenden Erfindung umfasst ein Verfahren zum Steuern eines Anbausystems für eine Pflanze Schritte des optischen Abtastens der Pflanze; des Bestimmens eines Zustands der Pflanze auf der Basis der Abtastung; und das Steuern eines Umwelteinflusses auf die Pflanze in Abhängigkeit des bestimmten Zustands.

Das Verfahren kann mittels eines hierin beschriebenen Anbausystems teilweise oder vollständig ausgeführt werden. Dazu kann das Anbausystem eine Verarbeitungseinrichtung aufweisen, die einen programmierbaren Mikrocomputer oder Mikrocontroller umfassen kann. Das Verfahren kann als Computerprogrammprodukt mit Programmcodemitteln vorliegen und optional auf einem computerlesbaren Datenträger abgespeichert sein. Vorteile oder Merkmale des Anbausystems können auf das Verfahren übertragen werden und umgekehrt.

Die Erfindung wird nun unter Bezug auf die beiliegenden Figuren genauer beschrieben, in denen:
- Figur 1: ein Anbausystem für Pflanzen in einem Haushalt; und
- Figur 2: ein Ablaufdiagramm eines Verfahrens
darstellt.

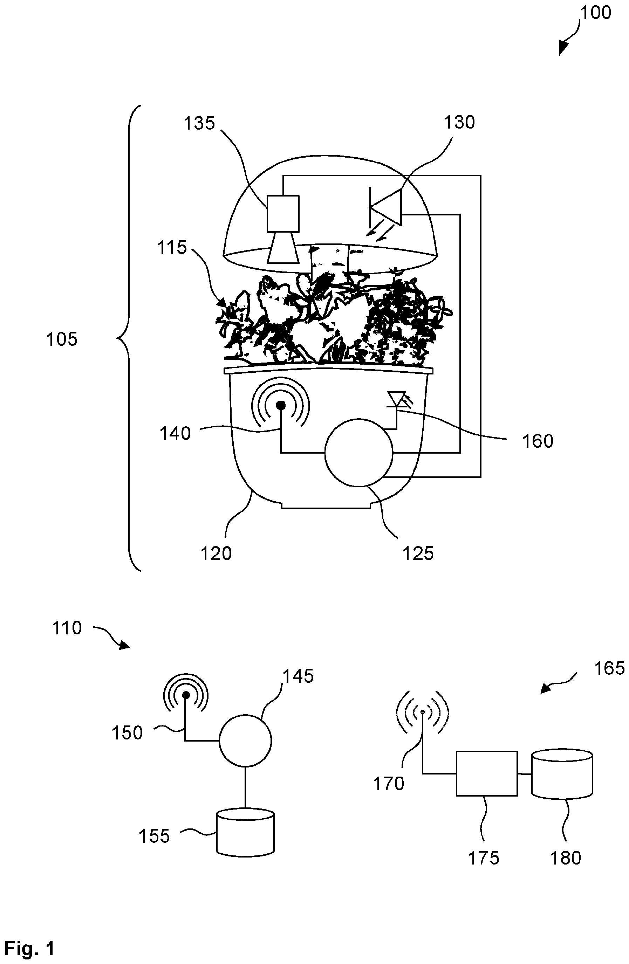

Figur 1 zeigt ein Anbausystem 100 für einen Haushalt. Das Anbausystem 100 umfasst ein Gartenbausystem 105 und eine optionale Steuerung 110. Das Gartenbausystem 105 ist dazu eingerichtet, eine oder mehrere Pflanzen 115 automatisiert anzubauen. Dazu umfasst das Gartenbausystem 105 einen Behälter 120, in dem üblicherweise ein Substrat aufgenommen ist, in welchem die Pflanze 115 Halt findet. Eine Verarbeitungseinrichtung 125 ist dazu eingerichtet, wenigstens einen Aktor 130, der vorliegend exemplarisch als Beleuchtung ausgebildet ist, zu steuern, um einen Umwelteinfluss auf die Pflanze 115 zu steuern. Beispielsweise können eine Bewässerung, eine Düngung oder eine Temperierung der Pflanze 115 realisiert sein. Im Anbausystem 100 können insbesondere Pflanzen gezüchtet werden, die für den menschlichen Verzehr geeignet sind, beispielsweise Küchenkräuter, Obst oder Gemüse.

Bevorzugt umfasst das Gartenbausystem 105 ferner eine Kamera 135 zur optischen Abtastung einer Pflanze 115. Die Kamera 135 kann am Gartenbausystem 105 fest oder beweglich angebracht sein. Eine Bewegung der Kamera 135 kann durch die Verarbeitungseinrichtung 125 gesteuert werden, um Bilder aus einer oder mehreren unterschiedlichen Perspektiven anzufertigen. Die Verarbeitungseinrichtung 125 ist weiter bevorzugt mit einer Schnittstelle 140 ausgestattet, die drahtlos ausgeführt sein kann. Insbesondere kann die Schnittstelle 140 nach dem Bluetooth- oder WLAN-Standard arbeiten.

Die Verarbeitungseinrichtung 125 kann alle für wesentlichen die Steuerung des Gartenbausystems 105 erforderlichen Steuerfunktionen durchführen. Optional können einige oder alle Aufgaben auch durch die die externe Steuervorrichtung 110 erfolgen. Die Steuerung 110 kann als dedizierte Vorrichtung oder als Mobilgerät, insbesondere als Smartphone, ausgeführt sein und üblicherweise eine Verarbeitungseinrichtung 145 und eine bevorzugt drahtlose Schnittstelle 150 zur Kommunikation mit dem Gartenbausystem 105.

Zur Interaktion mit einem Benutzer sind weiter bevorzugt eine Eingabeeinrichtung und/oder eine Ausgabeeinrichtung (nicht dargestellt) vorgesehen. Ein Touchscreen kann sowohl zur Ausgabe als auch zur Eingabe vorgesehen sein. Eine solche Interaktionseinrichtung kann vom Gartenbausystem 105 und/oder von der Steuervorrichtung 110 umfasst sein.

Die Steuerung 110 kann einen lokalen Speicher 155 umfassen, in welchem Informationen abgelegt sein können, die einem erkannten Zustand einer Pflanze 115 zugeordnet sind. Ist keine Steuerung 110 vorgesehen, so kann der Speicher 155 auch vom Gartenbausystem 105 umfasst sein. Die Informationen können insbesondere einen empfohlenen Umwelteinfluss auf die Pflanze 115 in Abhängigkeit eines vorbestimmten Entwicklungsziels umfassen. So kann zu einem bestimmten Zustand der Pflanze 115, gegebenenfalls in Abhängigkeit eines vorbestimmten Entwicklungsziels, ein bevorzugter Umweltparameter bestimmt werden, beispielsweise eine empfohlene Temperatur oder Luftfeuchtigkeit. Der Aktor 130 kann in Abhängigkeit der Informationen so gesteuert werden, dass der empfohlene Umwelteinfluss an der Pflanze 115 eingehalten ist.

In einer weiteren Ausführungsform wird für die Zuordnung eines Umweltparameters zu einem Zustand der Pflanze 115 ein externer Dienst befragt, der beispielsweise über die Schnittstelle 140, 150 kontaktiert werden kann. Ein intern bestimmter oder von extern abgerufener Umwelteinfluss kann durch einen Benutzer ersetzt oder verändert werden.

Umwelteinflüsse an einer Pflanze 115 können gesammelt und weitergegeben werden. Beispielsweise kann ein Benutzer Umwelteinflüsse an einer ersten Pflanze 115 selbst vorgeben. Der Zustand der Pflanze 115 kann zusammen mit den Umwelteinflüssen gespeichert und später an einer zweiten Pflanze 115 gesteuert werden. Dabei können Zustände der Pflanzen 115 aufeinander bezogen werden, sodass die zweite Pflanze 115 in Abhängigkeit ihres jeweiligen Zustands unter einem Umwelteinfluss steht, unter dem die erste Pflanze 115 in einem vergleichbaren Zustand stand.

Ein optional vorgesehener Sensor 160 kann dazu eingerichtet sein, einen Umwelteinfluss auf die Pflanze 115 zu bestimmen. Der Umwelteinfluss kann zu einem Einfluss eines Aktors 130 korrespondieren. So kann beispielsweise für eine Beleuchtung 130 ein korrespondierender Sensor 160 einen Lichtsensor umfassen. Dabei können eine Helligkeit, eine Spektralverteilung von erfasstem Licht oder ein zeitlicher Verlauf eines der Parameter bestimmt werden. Für mehrere Aktoren 130 können auch mehrere Sensoren 160 vorgesehen sein. Außerdem kann ein Sensor 160 vorgesehen sein, zu dem kein Aktor 130 korrespondiert oder umgekehrt.

In einer Ausführungsform erfasst der Sensor 160 nur einen externen Einfluss und die Verarbeitungseinrichtung 125 kann den Aktor 130 derart steuern, dass der Einfluss des Aktors 130 und der bestimmte Umwelteinfluss zusammen dem empfohlenen Umwelteinfluss entsprechen. So kann die Pflanze 115 beispielsweise vorwiegend mit Sonnenlicht beleuchtet werden, vor Sonnenaufgang und nach Sonnenuntergang jedoch mittels der Beleuchtung 130. In einer anderen Ausführungsform kann der Sensor 160 einen gesamten Umwelteinfluss auf die Pflanze 115 bestimmen und die Verarbeitungseinrichtung 125 kann den Aktor 130 so steuern, dass der erfasste Umwelteinfluss möglichst dem empfohlenen entspricht.

Eine zentrale Stelle 165 kann dazu eingerichtet sein, optische Abtastungen einer Pflanze 115 zusammen mit wenigstens einem Umgebungseinfluss entgegenzunehmen. Insbesondere kann die zentrale Stelle 165 eine zeitliche Reihe von Abtastungen der Pflanze 115 mit jeweils geltenden Umweltbedingungen entgegennehmen. Zur Kommunikation kann die zentrale Stelle 165 eine Kommunikationseinrichtung 170, eine Verarbeitungseinrichtung 175 sowie eine Speichervorrichtung 180 umfassen. In einer besonders bevorzugten Ausführungsform ist die zentrale Stelle 165 dazu eingerichtet, eine Vielzahl von Abtastungen und begleitenden Umwelteinflüssen an Pflanzen 115 von einer Vielzahl Anbausystemen 100 entgegenzunehmen und auf der Basis der empfangenen Informationen Datensätze zu bilden, die zum Trainieren eines künstlichen neuronalen Netzwerks verwendet werden können. Das KNN kann insbesondere darauf trainiert werden, einen Zustand einer Pflanze 115 zu bestimmen und/oder eine Empfehlung für einen Umwelteinfluss auf die Pflanze 115 in Abhängigkeit eines vorbestimmten Entwicklungsziels bereitzustellen. Die zentrale Stelle 165 kann das trainierte KNN nach Art eines Auskunftsdiensts für Anbausysteme 100 selbst betreiben oder an eine Steuerung 110 eines Anbausystems 100 bereitstellen. In einer Ausführungsform können trainierte KNN periodisch oder ereignisgesteuert an eines oder mehrere Anbausysteme 100 übermittelt werden.

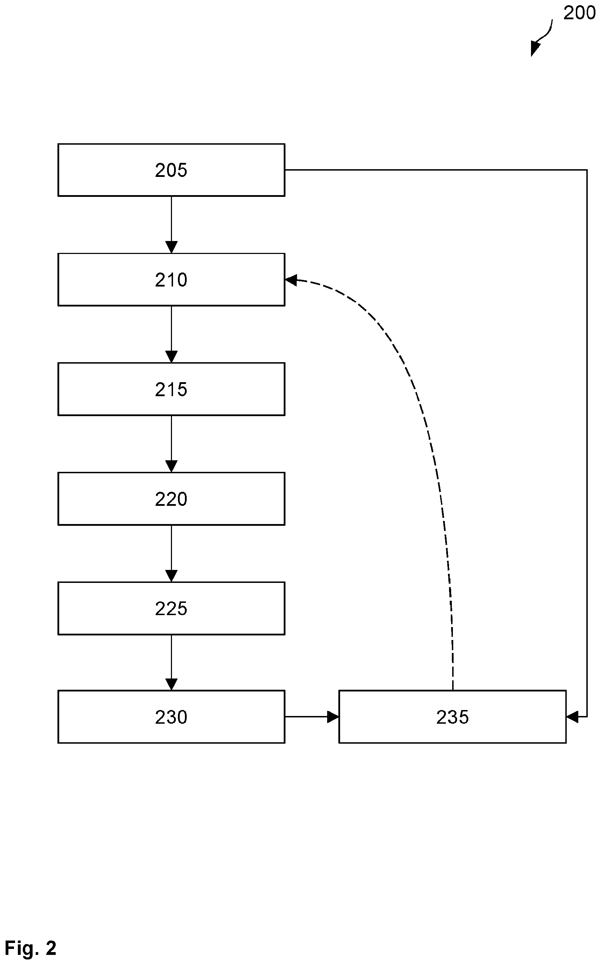

Figur 2 zeigt ein Ablaufdiagramm eines Verfahrens 200, das insbesondere mittels eines Anbausystems 100 ausgeführt werden kann.

In einem Schritt 205 kann eine Pflanze 115 mittels einer Kamera 135 optisch abgetastet werden. In einem Schritt 210 kann ein Zustand der Pflanze 115 bestimmt werden. Optional kann auch die Pflanze 115 bestimmt werden. Das Bestimmen erfolgt bevorzugt mittels eines KNN auf der Basis der Abtastung. Der Zustand kann insbesondere einen Entwicklungszustand oder einen Mangelzustand betreffen. Ein Entwicklungszustand kann in einen vorbestimmten Ablauf von Entwicklungszuständen im Leben der Pflanze 115 vorbestimmt sein. Ein Mangelzustand kann darauf hinweisen, dass ein vorbestimmter Umwelteinfluss nicht in einer für die Pflanze 115 optimalen Quantität oder Qualität vorliegt. Beispielsweise kann eine trockene Pflanze 115 erkannt werden, die entweder zu viel Wärme oder zu viel Licht oder zu wenig Wasser genießt.

In einem Schritt 215 kann ein Entwicklungsziel für die Pflanze 115 bestimmt werden. Das Entwicklungsziel kann von einem Benutzer des Anbausystems 100 vorbestimmt sein und beispielsweise einen Entwicklungszustand oder einen Reifegrad der Pflanze 115 betreffen. Beispielhafte Entwicklungsziele können ein Keimen, ein Wachsen, ein Ausbilden von Früchten, ein Ausbilden von Samen, ein Blühen oder ein Konservieren eines Entwicklungszustands umfassen. In einer weiteren Ausführungsform kann für das Erreichen eines vorbestimmten Entwicklungsziels ein zeitliches Ziel vorgegeben werden. Das Anbausystem 100 kann dann versuchen, das gewünschte Entwicklungsziel zum gewünschten Zeitpunkt an der Pflanze 115 hervorzurufen.

In einem Schritt 220 kann ein gewünschter, bevorzugter oder empfohlener Umwelteinfluss auf die Pflanze 115 bestimmt werden. Der bevorzugte Umwelteinfluss kann in Abhängigkeit des bestimmten Zustands der Pflanze 115, des gewünschten Entwicklungsziels und ggf. des Entwicklungszeitpunkts bestimmt werden. Der hierbei bestimmte Umwelteinfluss kann einem SOLL-Parameter entsprechen.

In einem Schritt 225 kann ein tatsächlich auf die Pflanze 115 wirkender Umwelteinfluss derselben Kategorie bestimmt werden. Dieser Umwelteinfluss kann auch als IST-Einfluss bezeichnet werden. In einer ersten Variante kann dabei ein insgesamt auf die Pflanze 115 wirkender Umwelteinfluss bestimmt werden. In einer zweiten Variante kann ein Umwelteinfluss bestimmt werden, der ohne den Einfluss des Aktors 130 auf die Pflanze 115 wirkt. Die Bestimmung kann insbesondere mittels des Sensors 160 erfolgen. Es wird davon ausgegangen, dass der Aktor 130 denselben Umwelteinfluss auf die Pflanze 115 bewirken kann, den der Sensor 160 bestimmen kann.

In einem Schritt 230 kann der Aktor 130 dazu angesteuert werden, den Umwelteinfluss auf die Pflanze 115 derart zu beeinflussen, dass er dem im Schritt 220 bestimmten SOLL-Parameter möglichst nahekommt.

Optional können in einem Schritt 235 die Abtastung der Pflanze 115 vom Schritt 205 sowie optional Randbedingungen oder Umwelteinflüsse für die Pflanze 115 bestimmt und in einem Datensatz zusammengefasst werden. Der Datensatz kann zum Trainieren eines KNN verwendet werden. Das trainierte KNN kann später im Schritt 210 zur Bestimmung des Zustands der Pflanze 115 sowie optional zum Bestimmen eines SOLL-Parameters im Schritt 220 verwendet werden.

### Bezugszeichen

- 100: Anbausystem
- 105: Gartenbausystem
- 110: Steuerung
- 115: Pflanze
- 120: Behälter
- 125: Verarbeitungseinrichtung
- 130: Beleuchtung, Aktor
- 135: Kamera
- 140: Schnittstelle
- 145: Verarbeitungseinrichtung
- 150: Schnittstelle
- 155: Speicher
- 160: Sensor
- 165: zentrale Stelle
- 170: Kommunikationseinrichtung
- 175: Verarbeitungseinrichtung
- 180: Speichervorrichtung

- 200: Verfahren
- 205: Pflanze abtasten
- 210: Zustand der Pflanze erkennen
- 215: Entwicklungsziel bestimmen
- 220: Umwelteinfluss bestimmen (SOLL)
- 225: Umwelteinfluss bestimmen (IST)
- 230: Aktor steuern
- 235: Abtastung bereitstellen

## Patentansprüche

1. Anbausystem (100) für eine Pflanze (115), umfassend:
- eine Kamera (135) zur optischen Abtastung einer angebauten Pflanze (115);
- einen Aktor (130) zur Steuerung eines Umwelteinflusses auf die Pflanze (115); und
- eine Verarbeitungseinrichtung (125), die dazu eingerichtet ist, einen Zustand der Pflanze (115) in einer optischen Abtastung zu erkennen und den Aktor (130) in Abhängigkeit des bestimmten Zustands zu steuern.

2. Anbausystem (100) nach Anspruch 1, wobei der Aktor (130) in Abhängigkeit eines vorbestimmten Entwicklungsziels der Pflanze (115) gesteuert wird.

3. Anbausystem (100) nach Anspruch 2, wobei das Entwicklungsziel eines von einem Keimen, einem Wachsen, einem Ausbilden von Früchten, einem Ausbilden von Samen, einem Blühen oder einem Konservieren eines Entwicklungszustands umfasst.

4. Anbausystem (100) nach einem der vorangehenden Ansprüche, wobei der Aktor (130) eine Beleuchtung umfasst.

5. Anbausystem (100) nach einem der vorangehenden Ansprüche, wobei die Pflanze (115) erkannt wird.

6. Anbausystem (100) nach einem der vorangehenden Ansprüche, wobei das Erkennen mittels eines künstlichen neuronalen Netzwerks erfolgt.

7. Anbausystem (100) nach einem der vorangehenden Ansprüche, wobei eine optische Abtastung einer erkannten Pflanze (115) zum Trainieren eines künstlichen neuronalen Netzwerks bereitgestellt wird.

8. Anbausystem (100) nach Anspruch 7, wobei einer bereitgestellten optischen Abtastung ein auf die Pflanze (115) einwirkender Umwelteinfluss zugeordnet ist.

9. Anbausystem (100) nach einem der vorangehenden Ansprüche, ferner umfassend einen Sensor (160) zur Bestimmung eines bestehenden Umwelteinflusses auf die Pflanze (115); wobei der Aktor (130) derart gesteuert wird, dass der bestehende Umwelteinfluss an einen vorbestimmten Umwelteinfluss angepasst wird.

10. Anbausystem (100) nach einem der vorangehenden Ansprüche, wobei der Aktor (130) dazu eingerichtet ist, eines von einer Beleuchtung, einer Bewässerung, einer Temperierung, einer Luftbewegung und einer Zufuhr von Nährstoffen für die Pflanze (115) zu steuern.

11. Anbausystem (100) nach einem der vorangehenden Ansprüche, wobei die Verarbeitungseinrichtung (125) dazu eingerichtet ist, zu bestimmen, dass die Pflanze (115) einen vorbestimmten Entwicklungszustand erreicht hat und einen Hinweis auf eine Beschaffung einer neuen Pflanze (115) bereitzustellen.

12. Verfahren (200) zum Steuern eines Anbausystems (100) für eine Pflanze (115), wobei das Verfahren (200) folgende Schritte umfasst:
- optisches Abtasten (205) der Pflanze (115);
- Bestimmen (210) eines Zustands der Pflanze (115) auf der Basis einer Abtastung; und
- Steuern (230) eines Umwelteinflusses auf die Pflanze (115) in Abhängigkeit des bestimmten Zustands.
